# FASCICULE DE BREVET EUROPEEN

(11) **EP 0 549 953 B1**
(45) Date de publication et mention de la délivrance du brevet: **13.09.1995**
(21) Numéro de dépôt: 92121388.0
(22) Date de dépôt: 16.12.1992
(51) Int. Cl.: A47J 27/21

(54) **Bouilloire électrique**
Elektrischer Flüssigkeitserhitzer
Electrical boiler

(30) Priorité: 24.12.1991 FR 9116109
(43) Date de publication de la demande: 07.07.1993
(73) Titulaire: MOULINEX SWAN HOLDINGS LIMITED, Birmingham B1 3DL (GB)
(72) Inventeur: Ettridge, Ian Geoffrey, Birmingham B1 3DL (GB)
(74) Mandataire: May, Hans Ulrich, Dr.

(56) Documents cités:
- GB-A- 248 532
- GB-A- 2 190 826
- US-A- 5 062 145

## Description

L'invention concerne une bouilloire électrique comportant un réservoir qui est destiné à contenir de l'eau susceptible d'être portée à ébullition par une résistance chauffante, et qui comporte une poignée et deux ouvertures, une ouverture de remplissage située au sommet du réservoir et une ouverture de déversement située au niveau d'un bec verseur.

L'invention se rapporte, plus particulièrement, à une bouilloire de ce type dans laquelle les ouvertures sont susceptibles d'être fermées respectivement par un couvercle associé à un dispositif de verrouillage, et un clapet commandé par une gâchette montée mobile sur la poignée, de manière que le clapet puisse occuper deux états, soit un état fermé pour lequel des moyens élastiques maintiennent le clapet contre l'ouverture de déversement, soit un état ouvert en lequel il est amené à l'encontre des moyens élastiques par action sur la gâchette et pour lequel il est maintenu en retrait de ladite ouverture.

L'inconvénient de ce type d'appareil est, en fonctionnement normal, de présenter des risques d'expulsion de jets de vapeur dus au fait que cette vapeur génère de la pression dans le réservoir rendu étanche par le couvercle et le clapet. Pour éviter cela, on utilise une construction avec une soupape de sûreté, comme cela est connu d'après le document GB-A-2 190 826. Or, il a été remarqué que même après la déconnexion de l'appareil la vapeur maintient une certaine pression. Par conséquent, dans l'éventualité d'un renversement ou d'une chute de la bouilloire sur le sol et si la soupape se trouve sous l'eau pendant cet accident, la pression de vapeur risque de faire sauter le couvercle ce qui peut occasionner des accidents. Pour remédier à cet inconvénient, il faudrait utiliser un dispositif de verrouillage du couvercle particulièrement important et coûteux.

L'invention a donc pour but de fournir une bouilloire particulièrement sûre pendant le fonctionnement et en cas de renversement, tout en étant de construction simple et économique.

Selon l'invention, le couvercle présente un moyen de passage sélectif permettant, en cas de renversement de la bouilloire, l'échappement de la vapeur tout en restreignant le passage de l'eau, ainsi qu'une chicane protégeant le moyen de passage sélectif en retenant pratiquement l'eau dans le réservoir, tandis que le dispositif de verrouillage du couvercle est lié à la gâchette du clapet, de manière à empêcher l'ouverture du clapet et du couvercle en cas de renversement de la bouilloire.

Ainsi grâce au moyen de passage sélectif et à la chicane, on obtient un dispositif d'échappement de la vapeur particulièrement simple et sûr. En effet, le moyen de passage sélectif permet l'échappement de la vapeur en fonctionnement normal et en cas de chute , tandis que la chicane permet d'éviter, en cas de chute, que l'eau sous pression ne vienne forcer le moyen de passage sélectif, protègeant ainsi l'utilisateur contre les projections d'eau chaude.

De plus, le dispositif de verrouillage, étant lié au moyen de fermeture du clapet, assure, dès que l'utilisateur lâche la gâchette, que le clapet et le couvercle soient maintenus fermés simultanément même pendant une chute de l'appareil. Cette disposition augmente donc la sécurité.

Les caractéristiques et avantages de l'invention ressortiront d'ailleurs de la description qui va suivre, à titre d'exemple, en référence au dessin annexé dans lequel :

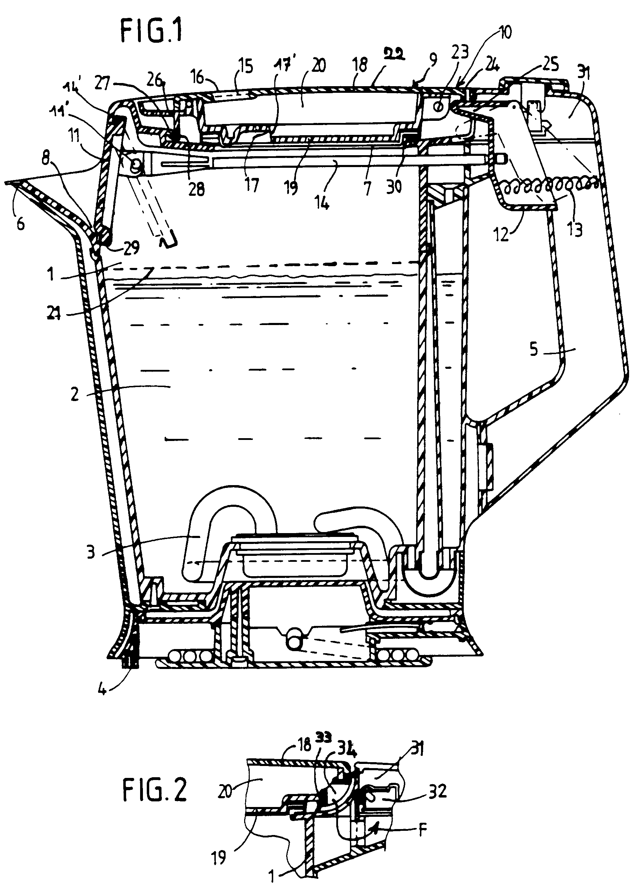

la figure 1 est une vue en coupe verticale d'une bouilloire selon l'invention ; la figure 2 est une vue, dans un autre plan de coupe que celui de la figure 1, d'un détail du couvercle selon l'invention.

La bouilloire électrique telle que représentée sur la figure 1, comporte un réservoir 1 qui est destiné à contenir de l'eau 2 susceptible d'être portée à ébullition par une résistance chauffante 3. Le réservoir 1 a une construction à double paroi pour limiter les déperditions de chaleur. Le réservoir peut être, par exemple, posé sur un socle indépendant 4 d'alimentation en courant électrique.

Le réservoir 1 comporte une poignée 5 située à l'opposé d'un bec verseur 6, et deux ouvertures, une ouverture de remplissage 7 située au sommet du réservoir 1 et une ouverture de déversement 8 située au niveau du bec verseur 6. Ces ouvertures 7 et 8 sont susceptibles d'être fermées respectivement par un couvercle 9 associé à un dispositif de verrouillage 10, et par un clapet 11 commandé par une gâchette 12 montée mobile sur la poignée 5, de manière que le clapet 11 puisse occuper deux états, soit un état fermé (représenté en traits pleins) pour lequel des moyens élastiques, tel que par exemple, un ressort (schématisé en 13) maintiennent le clapet 11 contre l'ouverture de déversement 8, soit un état ouvert (représenté en traits interrompus) en lequel il est amené à l'encontre du ressort 13 par action sur la gâchette 12 par l'utilisateur et pour lequel il est maintenu en retrait de ladite ouverture 8. Le clapet 11 est monté articulé autour d'un axe horizontal 11' et vient, en état fermé s'appuyer contre le bord externe de l'ouverture 8.

La gâchette 12 est reliée au clapet 11 au moyen d'une tige 14 solidaire de la gâchette, traversant le réservoir 1 et montée articulée en 14' sur le clapet 11.

Selon l'invention, le couvercle 9 présente un moyen de passage sélectif 15 qui permet l'échappement de la vapeur tout en restreignant le passage de l'eau, et qui est avantageusement formé par une membrane perméable à la vapeur disposée dans un orifice 16 du couvercle 9.
La membrane est réalisée soit en une toile à mailles particulièrement fines, soit en un matériau plastique tel que, par exemple, du polytétrafluoroéthylène expansé, plus connu sous la marque "GORTEX".
Si cette membrane remplit correctement sa fonction lors de l'utilisation normale de la bouilloire, il n'en est pas de même lorsque cette dernière vient à se renverser ou à chuter. En effet, la pression de vapeur générée même après une déconnexion de l'appareil, force l'eau au travers de la membrane 15 quelque soit sa superficie ou la dimension de ses mailles ou de ses pores. Pour empêcher cela, le couvercle 9 présente, en outre, une chicane 17 protègeant la membrane 15 en retenant pratiquement l'eau dans le réservoir. La membrane n'est donc pas complètement recouverte et la vapeur peut s'échapper.

Dans la réalisation décrite, à titre d'exemple, le couvercle 9 comporte deux parois, dites externes 18 et internes 19, ménageant entre elles une chambre 20 et présentant respectivement la membrane 15 et la chicane 17. La chambre 20 forme donc une sorte de tampon de vapeur entre le réservoir 1 et la membrane 15 de manière à renforcer la sécurité. De plus, la double paroi 18,19 permet d'obtenir une bouilloire pratiquement isotherme. La chicane 17 est formée par une dépression pratiquée dans la paroi 19 et dont la paroi latérale présente un orifice 17' très fin n'autorisant pratiquement pas le passage d'eau.

La chicane 17 est disposée sensiblement dans un plan passant par le bec verseur 6 et la poignée 5 afin d'éviter que la chicane 17 soit complètement recouverte par l'eau quand le réservoir 1 est rempli à un niveau maximum 21 représenté par la ligne en traits interrompus déterminé par le fabricant, et est basculé sur le côté. Comme on le comprendra, la position de cette chicane est déterminée en fonction de la forme donnée au réservoir et notamment de son volume qui doit être adapté pour permettre à la chicane de remplir sa fonction.

De plus, le couvercle 9 présente une face externe 22 légèrement bombée pour empêcher la bouilloire d'occuper une position stable lorsqu'elle est renversée. Ainsi elle se met forcément sur le côté, position dans laquelle la chicane n'est jamais complètement recouverte par l'eau pendant une longue durée, mais seulement pendant de brefs instants lors, des mouvements de l'eau, vagues ou éclaboussures provoquées par la chute de la bouilloire.

Dans un but de sécurité supplémentaire, le dispositif de verrouillage 10 du couvercle 9 est lié à la gâchette 12 du clapet 11, de manière à empêcher l'ouverture du clapet 11 et du couvercle 9 en cas de chute de la bouilloire.

Le couvercle 9 étant monté pivotant autour d'un axe de rotation 23, le dispositif de verrouillage 10 comporte un ergot 24 solidaire du couvercle et situé à proximité de l'axe 23, tandis que la gâchette 12 comporte une came 25 pouvant occuper deux positions, soit une position de blocage (représentée en traits pleins) en laquelle la came 25 vient entraver le mouvement de l'ergot 24 et donc la rotation du couvercle 9 autour de son axe 23 pour qu'il soit maintenu contre l'ouverture de remplissage 7, quand le clapet 11 occupe son état fermé sous l'effet du ressort 13, et pour laquelle ledit ressort 13 de la gâchette 12 maintient la came 25 en appui contre l'ergot 24, soit une position escamotée (représentée en traits interrompus) en laquelle elle est amenée par action de l'utilisateur sur la gâchette 12 à l'encontre du ressort 13 et pour laquelle elle est en retrait de l'ergot 24 et autorise la rotation du couvercle 9 autour de son axe 23, le clapet 11 occupant également son état ouvert.

Le dispositif de verrouillage 10 comporte, en outre, un verrou 26 monté articulé sur le couvercle 9 à l'opposé de l'ergot 24 et susceptible de s'accrocher sur un bord 27 du réservoir 1 au moyen d'un crochet 28.

Ainsi, le couvercle possède un double dispositif de fermeture pour augmenter la sécurité. En effet, pour ouvrir le couvercle 9, l'utilisateur doit, dans un premier temps, appuyer sur la gâchette 12, la came 25 libérant alors l'ergot 24, puis dans un deuxième temps, dégager le crochet 28 du verrou 26 du bord 27 du réservoir 1.

Si l'utilisateur lâche accidentellement la gâchette, le couvercle 9 se ferme automatiquement car la came 25 vient appuyer sur l'ergot 24 faisant ainsi pivoter le couvercle qui vient de nouveau s'accrocher au bord 27 du réservoir, grâce au verrou 26 rappelé par un moyen élastique (non représenté).

Grâce à l'invention, on obtient un réservoir 1 complètement étanche aux fuites d'eau dès que l'utilisateur cesse son action sur la gâchette 12. En outre le réservoir n'est jamais placé sous pression puisque la membrane 15 associée à la chicane 17 permettent toujours l'échappement de la vapeur. De simples joints 29 et 30 agencés respectivement autour du clapet 11 et du couvercle 9 suffisent pour assurer une complète étanchéité.

Par ailleurs, comme on le voit sur la figure 2, la bouilloire, présente dans la poignée 5, d'une manière connue en soi, un logement 31 dans lequel est disposé un interrupteur 32 sensible à la température de la vapeur, et destiné à couper l'alimentation électrique de la résistance 3 quand une température de consigne est atteinte. La chambre 20 comporte un orifice supplémentaire 33 débouchant latéralement pour permettre à la vapeur de passer de ladite chambre 20 au logement 31 (le cheminement de la vapeur est matérialisé par une flèche F). Cet orifice supplémentaire 33 est bordé par un anneau en caoutchouc 34, par exemple de forme tronconique, et dont l'ouverture centrale est suffisamment petite pour empêcher l'eau qui serait éventuellement passer dans la chambre 20 de pénétrer dans le logement 31. Ainsi, la chicane 17 protège aussi l'orifice 33 et donc l'interrupteur 32 contre les projections d'eau quand la bouilloire est basculée.

## Revendications

1. Bouilloire électrique comportant un réservoir (1) qui est destiné à contenir de l'eau susceptible d'être portée à ébullition par une résistance chauffante (3), et qui présente une poignée (5) et deux ouvertures, une ouverture de remplissage (7) située au sommet du réservoir (1) et une ouverture de déversement (8) située au niveau d'un bec verseur (6), susceptibles d'être fermées respectivement par un couvercle (9) associé à un dispositif de verrouillage (10), et un clapet (11) commandé par une gâchette (12) montée mobile sur la poignée (5), de manière que le clapet (11) puisse occuper deux états, soit un état fermé pour lequel des moyens élastiques (13) maintiennent le clapet (11) contre l'ouverture de déversement (8), soit un état ouvert en lequel il est amené à l'encontre des moyens élastiques (13) par action sur la gâchette (12) et pour lequel il est maintenu en retrait de ladite ouverture (8),
**caractérisée en ce que** le couvercle (9) présente un moyen de passage sélectif (15) permettant, en cas de renversement de la bouilloire, l'échappement de la vapeur tout en restreignant le passage de l'eau, ainsi qu'une chicane (17) protègeant le moyen de passage sélectif (15) en retenant pratiquement l'eau dans le réservoir (1), tandis que le dispositif de verrouillage (10) du couvercle (9) est lié à la gâchette (12) du clapet (11), de manière à empêcher l'ouverture du clapet (11) et du couvercle (9) en cas de renversement de la bouilloire.

2. Bouilloire selon la revendication 1,
**caractérisée en ce que** le moyen de passage sélectif (15) du couvercle (9) est formé par une membrane perméable à la vapeur disposée dans un orifice (16) du couvercle (9).

3. Bouilloire selon la revendication 1 ou 2,
**caractérisée en ce que**, la poignée (5) étant située à l'opposé du bec verseur (6), la chicane (17) est disposée pratiquement dans un plan passant par le bec verseur (6) et la poignée (5) afin d'éviter que la chicane (17) ne soit complètement recouverte par l'eau quand le réservoir (1) est rempli à un niveau maximum déterminé (21) et est basculé sur le côté.

4. Bouilloire selon l'une quelconque des revendications 1 à 3,
**caractérisée en ce que** le couvercle (9) présente une face externe (22) légèrement bombée pour empêcher la bouilloire d'occuper, en cas de chute, une position stable lorsqu'elle vient à être retournée.

5. Bouilloire selon l'une quelconque des revendications 1 à 4,
**caractérisée en ce que**, le couvercle (9) étant monté pivotant autour d'un axe de rotation (23), le dispositif de verrouillage (10) comporte un ergot (24) solidaire du couvercle et situé à proximité de l'axe (23) tandis que la gâchette (12) comporte une came (25) pouvant occuper deux positions, soit une position de blocage en laquelle la came (25) vient entraver le mouvement de l'ergot (24) et donc la rotation du couvercle (9) autour de son axe (23) pour qu'il soit maintenu contre l'ouverture de remplissage (7), et pour laquelle les moyens élastiques (13) de la gâchette (12) maintiennent la came (25) en appui contre l'ergot (24), soit une position escamotée en laquelle elle est amenée par action sur la gâchette (12) à l'encontre des moyens élastiques (13) et pour laquelle elle est en retrait de l'ergot (24) et autorise la rotation du couvercle (9) autour de son axe (23).

6. Bouilloire selon la revendication 5, **caractérisée en ce que** le dispositif de verrouillage (10) comporte, en outre, un verrou (26) monté articulé sur le couvercle (9) à l'opposé de l'ergot (24) et susceptible de s'accrocher sur un bord (27) du réservoir au moyen d'un crochet (28).

7. Bouilloire selon l'une quelconque des revendications précédentes,
**caractérisée en ce que** le couvercle comporte deux parois, dites externe (18) et interne (19), ménageant entre elles une chambre (20) et présentant respectivement le moyen de passage sélectif (15) et la chicane (17).

8. Bouilloire présentant, dans la poignée (5), un logement (31) dans lequel est disposé un interrupteur (32) sensible à la température de la vapeur, et conforme à la revendication 7,
**caractérisée en ce qu'**un orifice supplémentaire (33) est prévu dans le couvercle (9) pour permettre à la vapeur de passer de la chambre (20) au logement (31), de manière à éviter l'arrivée d'eau dans ledit logement.

9. Bouilloire selon l'une quelconque des revendications 2 à 8,
**caractérisée en ce que** la membrane (15) est réalisée en une toile à mailles particulièrement fines.

10. Bouilloire selon l'une quelconque des revendications 2 à 8,
**caractérisée en ce que** la membrane (15) est réalisée en un matériau plastique tel que, par exemple, du polytétrafluoroéthylène expansé.

## Claims

1. Electric kettle having a reservoir (1) which is designed to contain water able to be raised to boiling point by a heating element (3), and which has a handle (5) and two openings, a filling opening (7) situated at the top of the reservoir (1) and a pouring opening (8) situated level with a pouring spout (6), able to be closed off respectively by a lid (9) associated with a locking device (10), and a flap (11) controlled by a trigger (12) movably mounted on the handle (5), in such a way that the flap (11) is able to occupy two states, either a closed state in which elastic means (13) hold the flap (11) against the pouring opening (8), or an open state into which it is brought counter to the elastic means (13) by acting on the trigger (12) and in which it is held withdrawn from the said opening (8), characterised in that the lid (9) has a selective passage means (15) allowing, in the event of overturning of the kettle, the steam to escape whilst restricting the passage of water, and a baffle (17) protecting the selective passage means (15) whilst practically retaining the water in the reservoir (1), while the locking device (10) for the lid (9) is connected to the trigger (12) for the flap (11), so as to prevent the opening of the flap (11) and of the lid (9) in the event of an overturning of the kettle.

2. Kettle according to Claim 1, characterised in that the selective passage means (15) of the lid (9) is formed by a membrane permeable to steam disposed in an orifice (16) in the lid (9).

3. Kettle according to Claim 1 or 2, characterised in that, the handle (5) being situated opposite the pouring spout (6), the baffle (17) is disposed practically in a plane passing through the pouring spout (6) and the handle (5) so as to prevent the baffle (17) from being completely covered with water when the reservoir (1) is filled up to a determined maximum level (21) and is tilted to one side.

4. Kettle according to any one of Claims 1 to 3, characterised in that the lid (9) has a slightly dished external face (22), to prevent the kettle, in the event of a fall, from occupying a stable position when it has just been overturned.

5. Kettle according to any one of Claims 1 to 4, characterised in that, the lid (9) being mounted so as to pivot about a rotation axis (23), the locking device (10) has a lug (24) integral with the lid and situated near to the axis (23), while the trigger (12) has a cam (25) able to occupy two positions, either a locking position in which the cam (25) comes to obstruct the movement of the lug (24) and therefore the rotation of the lid (9) about its axis (23) so that it is held against the filling opening (7), and in which the elastic means (13) of the trigger (12) hold the cam (25) in abutment against the lug (24), or a retracted position into which it is brought by action on the trigger (12) counter to the elastic means (13) and in which it is withdrawn from the lug (24) and permits the rotation of the lid (9) about its axis (23).

6. Kettle according to Claim 5, characterised in that the locking device (10) also has a lock (26) mounted so as to pivot on the lid (9) opposite the lug (24) and able to hook onto an edge (27) of the reservoir by means of a hook (28).

7. Kettle according to any one of the preceding claims, characterised in that the lid has two walls, referred to as external (18) and internal (19), forming between them a chamber (20) and having respectively the selective passage means (15) and the baffle (17).

8. Kettle having, in the handle (5), a housing (31) in which there is disposed a switch (32) sensitive to the temperature of the steam, and in accordance with Claim 7, characterised in that a supplementary orifice (33) is provided in the lid in order to allow the steam to pass from the chamber (20) to the housing (31) so as to prevent water from entering the said housing.

9. Kettle according to any one of Claims 2 to 8, characterised in that the membrane (15) is produced from a canvas with particularly fine mesh.

10. Kettle according to any one of Claims 2 to 8, characterised in that the membrane (15) is produced from a plastic material such as, for example, expanded polytetrafluoroethylene.

## Patentansprüche

1. Elektrischer Wasserkessel mit einem Behälter (1), der zur Aufnahme von Wasser bestimmt ist, das durch einen Heizwiderstand (3) zum Sieden gebracht werden kann und der einen Handgriff (5) und zwei Öffnungen, eine an der Spitze des Behälters (1) angeordnete Füllöffnung (7) und eine auf der Höhe einer Gießschnauze (6) angeordnete Ausgießöffnung (8) aufweist, die jeweils durch einen Deckel (9), der mit einer Verriegelungsvorrchtung (10) zusammenwirkt, und durch eine Klappe (11) verschließbar sind, die durch einen am Handgriff (5) montierten Drücker (12) gesteuert ist, so daß die Klappe (11) zwei Stellungen einnehmen kann, nämlich eine geschlossene Stellung, in welcher eine elastische Vorrichtung (13) die Klappe (11) gegen die Ausgießöffnung (8) hält, oder eine offene Stellung, in die sie gegen die Wirkung der elastischen Vorrichtung (13) durch Einwirkung auf den Drücker (12) gebracht wird und in der sie von der Öffnung (8) zurückgezogen gehalten ist, **dadurch gekennzeichnet**, daß der Deckel (9) eine selektive Auslaßvorrichtung (15) aufweist, die im Fall des Umdrehens des Wasserkessels das Entweichen von Dampf bei gleichzeitiger Einschränkung des Durchgangs von Wasser ermöglicht, sowie eine Umlenkwand (17) aufweist, welche die selektive Auslaßvorrichtung (15) schützt, indem sie praktisch das Wasser im Behälter (1) zurückhält, während die Verriegelungsvorrichtung (10) des Deckels (9) mit dem Drücker (12) der Klappe (11) so verbunden ist, daß sie das Öffnen der Klappe (11) und des Deckels (9) im Fall des Drehens des Wasserkessels verhindert.

2. Wasserkessel nach Anspruch 1, **dadurch gekennzeichnet**, daß die selektive Auslaßvorrichtung (15) des Deckels (9) von einer dampfdurchlässigen Membran gebildet ist, die in einer Öffnung (16) des Deckels (9) angeordnet ist.

3. Wasserkessel nach Anspruch 1 oder 2, **dadurch gekennzeichnet**, daß der Handgriff (5) gegenüber der Gießschnauze (6) und die Umlenkwand (17) praktisch in einer durch die Gießschnauze (6) und den Handgriff (5) gehenden Ebene angeordnet ist, um zu vermeiden, daß die Umlenkwand (17) völlig mit Wasser abgedeckt ist, wenn der Behälter (1) bis zu einer bestimmten maximalen Höhe (21) gefüllt ist und auf die Seite umgelegt wird.

4. Wasserkessel nach einem der Ansprüche 1 bis 3, **dadurch gekennzeichnet**, daß der Deckel (9) eine leicht vorgewölbte Außenfläche (22) aufweist, um zu verhindern, daß der Wasserkessel im Fall des Herabfallens eine stabile Stellung einnimmt, wenn er umgedreht wurde.

5. Wasserkessel nach einem der Ansprüche 1 bis 4, **dadurch gekennzeichnet**, daß der Deckel (9) um eine Drehachse (23) schwenkbar montiert ist und die Verriegelungsvorrichtung (10) einen Zapfen (24) aufweist, der mit dem Deckel fest verbunden und in der Nähe der Drehachse (23) angeordnet ist, während der Drücker (12) eine Nockenscheibe (25) aufweist, welche zwei Stellungen einnehmen kann, nämlich eine Verriegelungsstellung, in der die Nockenscheibe (25) die Bewegung des Zapfens (24) und damit die Drehung des Deckels (9) um seine Drehachse (23) verhindert, damit er gegen die Füllöffnung (7) gehalten wird, und in welcher die elastische Vorrichtung (13) des Drückers (12) die Nockenscheibe (25) gegen den Zapfen (24) angedrückt hält, oder eine weggeschwenkte Stellung, in welche sie durch Einwirkung auf den Drücker (12) gegen die Wirkung der elastischen Vorrichtung (13) gebracht wird, und in der sie vom Zapfen (24) zurückgezogen ist und die Drehung des Deckels (9) um seine Drehachse (23) zuläßt.

6. Wasserkessel nach Anspruch 5, **dadurch gekennzeichnet**, daß die Verriegelungsvorrichtung (10) außerdem einen am Deckel (9) gegenüber dem Zapfen (24) angelenkten Riegel (26) aufweist, der einen Rand (27) des Behälters mittels eines Hakens (28) übergreifen kann.

7. Wasserkessel nach einem der vorangehenden Ansprüche, **dadurch gekennzeichnet**, daß der Deckel zwei Wände, eine sogenannten Außenwand (18) und Innenwand (19) aufweist, die zwischen sich eine Kammer (20) bilden und jeweils die selektive Auslaßvorrichtung (15) und die Umlenkwand (17) aufweisen.

8. Wasserkessel, der im Handgriff (5) einen Sitz (31) aufweist, in dem ein auf die Temperatur des Dampfes ansprechender Schalter (32) angeordnet ist, und nach Anspruch 7, **dadurch gekennzeichnet**, daß im Deckel (9) eine zusätzliche Öffnung (33) vorgesehen ist, um den Durchgang von Dampf aus der Kammer (20) zum Sitz (31) so zu ermöglichen, daß der Eintritt von Wasser in den Sitz verhindert wird.

9. Wasserkessel nach einem der Ansprüche 2 bis 8, **dadurch gekennzeichnet**, daß die Membran (15) aus einem Gewebe mit besonders feinen Maschen besteht.

10. Wasserkessel nach einem der Ansprüche 2 bis 8, **dadurch gekennzeichnet**, daß die Membran (15) aus einem Kunststoffmaterial wie beispielsweise geschäumtem Polytetrafluorethylen besteht.
